(19) Europäisches Patentamt
European Patent Office
Office européen des brevets

(11) Publication number: **0 161 818**
**B1**

(12) **EUROPEAN PATENT SPECIFICATION**

(45) Date of publication of patent specification: **08.08.90**

(51) Int. Cl.[5]: **B 01 J 29/04,** B 01 J 27/16

(21) Application number: **85302693.8**

(22) Date of filing: **17.04.85**

(54) **A method of activating a crystalline aluminum phosphate.**

(30) Priority: **03.05.84 US 606497**
**03.05.84 US 606496**

(43) Date of publication of application:
**21.11.85 Bulletin 85/47**

(45) Publication of the grant of the patent:
**08.08.90 Bulletin 90/32**

(84) Designated Contracting States:
**BE DE FR GB IT NL**

(56) References cited:
**EP-A-0 043 562**
**EP-A-0 095 364**
**EP-A-0 146 384**
**US-A-3 091 544**

(73) Proprietor: **MOBIL OIL CORPORATION**
**150 East 42nd Street**
**New York New York 10017 (US)**

(72) Inventor: **Bowes, Emmerson**
**RD1, Box 336A Stonybrook Road**
**Hopewell New Jersey 08525 (US)**
Inventor: **Derouane, Eric Gerard**
**56 Rue des Champs Verts**
**B-5020 Namur (Champion) (BE)**
Inventor: **Ketkar, Anil Bhalchandra**
**192 Bull Run Road**
**Trenton New Jersey 08638 (US)**

(74) Representative: **Cooper, John Anthony et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 161 818 B1

## Description

This invention relates to a method of activating a preformed, crystalline aluminum phosphate and use of the activated product in hydrocarbon cracking.

Aluminum phosphates are taught in, for example, U.S. Patents 4,310,440 and 4,385,994. Aluminum phosphate materials have electroneutral lattices and, therefore, are not useful as ion-exchangers or as catalyst components. Microporous aluminum phosphates have a composition typified as:

$$xR : Al_2O_3 : (1.0 \pm 0.2)\ P_2O_5 : yH_2O$$

wherein R is an organic amine or quaternary ammonium salt entrapped within the aluminum phosphate and playing a role as crystallization template, and x and y represent the amounts of R and $H_2O$ needed to fill the microporous voids. Because of the aluminum/phosphorus atomic ratio of these materials is about unity, they display virtually no ion-exchange properties, the framework positive charge on phosphorus being balanced by corresponding negative charge on aluminum:

$$AlPO_4 = (AlO_2^-)\ (PO_2^+)$$

The phosphorus-substituted zeolites of Canadian Patents 911,416; 911,417 and 911,418 are referred to as "aluminosilicophosphate" zeolites. Some of the phosphorus therein appears to be occluded, not structural. These latter materials containing silicon, aluminum and phosphorus are characterized by the general formula:

$$M_{(x\text{-}y)}{:}x(AlO_2^-){:}(SiO_2){:}y(PO_2^+){:}zH_2O$$

wherein M is a monovalent cation, x is approximately 1—4, y is 0.05—1.0 and z is the number of hydration water molecules. Structural replacement of silicon with phosphorus has been realized in materials called silica clathrates (West Germany Patent 3,128,988).

U.S. Patent 4,363,748 describes a combination of silica and aluminum-calcium-cerium phosphate as a low acid activity catalyst for oxidative dehydrogenation. Great Britain Patent 2,068,253 discloses a combination of silica and aluminum-calcium-tungsten phosphate as a low acid activity catalyst for oxidative dehydrogenation. U.S. Patent 3,801,704 teaches an aluminum phosphate treated in a certain way to impart acidity. U.S. Patent 4,228,036 teaches an alumina-aluminum phosphate-silica matrix as an amorphous body to be mixed with zeolite for use as cracking catalyst. U.S. Patent 3,213,035 teaches improving hardness of aluminosilicate catalysts by treatment with phosphoric acid. The catalysts are amorphous.

U.S. Patent 2,876,266 describes an active silicophosphoric acid or salt phase of an amorphous material prepared by absorption of phosphoric acid by premolded silicates or aluminosilicates.

Other teachings of aluminum phosphates and their preparation include U.S. Patents 4,365,095; 4,361,705; 4,222,896; 4,210,560; 4,179,358; 4,158,621; 4,071,471; 4,014,945; 3,904,550 and 3,697,550. Since their neutral framework structure is void of ion-exchange properties, they are used as catalyst supports or matrices.

According to the invention, there is provided a method of increasing the acid catalytic activity of a crystalline aluminum phosphate catalyst, said method comprising combining:

(i) a solid, microporous, aluminum phosphate material;

(ii) an amorphous, activating metal oxide selected from $SiO_2$ and $GeO_2$; and

(iii) water

wherein said aluminum phosphate material and said activating metal oxide are intimately ground in the presence of said water.

Examples of crystalline aluminum phosphate compositions which may be activated in accordance with the present method are described in the aforementioned U.S. Patent No. 4,310,440. These compositions may have a framework structure with a chemical formula, expressed in terms of molar ratios of oxides, as follows:

$$Al_2O_3 : 1.0 \pm 0.2\ P_2O_5.$$

The lattice structure of the crystalline material may be associated with a characteristic x-ray powder diffraction pattern.

The solid, crystalline aluminum phosphate is activated with an amorphous activating metal oxide. Such activating metal oxides are materials which are capable of being incorporated into crystalline lattice structures containing aluminum oxides and phosphorus oxides in the form of electronically neutral tetrahedra of the formula $MO_4$, where M is Ge and/or Si. Silica is a preferred activating metal oxide. By way of contrast, aluminum atoms in such a lattice would be associated with negatively charged tetrahedra of the formula $AlO_4^-$, and phosphorous atoms in such a lattice would be associated with positively charged tetrahedra of the formula $PO_4^+$. Expressed in other terms, the activating metal oxide would be capable of

coexisting in the plus four valence state in a crystalline lattice structure also having aluminum oxide and phosphorus oxide.

The oxide will preferably also act as a binder material in the activated catalyst. Accordingly, preferred activated metal oxides may be supplied in the form of silica containing binder materials. Such silica containing binder materials include silica alone, silica-alumina, silica-zirconia, silica-thoria, silica-berylia, silica-titania as well as ternary compositions, such as silica-alumina-thoria, silica-alumina-zirconia, silica-alumina-magnesia or silica-magnesia-zirconia. Simple experiment may be employed to determine other useful materials.

The amount of activating metal oxide should be sufficient to activate the aluminum phosphate. Especially when this activating metal oxide is also used as a binder, the amount of this metal oxide may be, e.g., from 10 to 90 percent by weight, preferably 20 to 80 percent by weight, of the combined aluminum phosphate and activating metal oxide.

Without wishing to be bound by any theory or mode of action, it is theorized that activation of the crystalline aluminum phosphate may take place by incorporation of activating metal oxide (i.e. $MO_2$) directly into the aluminum phosphate lattice structure. When M is Si, the resulting lattice structure would be analogous to the silicophosphoaluminate lattice structures described in U.S. Application Serial No. 562,673 (EP—A—0 146 384). As pointed out in this application, silicophosphoaluminates are more catalytically active than aluminum phosphate crystalline materiials which are substantially free of silica in the framework structure thereof.

It is further theorized that incorporation of the activating metal oxide into the lattice structure of the aluminum phosphate lattice may be enhanced by a solid state interaction of the aluminum phosphate and activating metal oxide in the presence of shearing forces sufficient to cleave lattice layers of aluminum phosphate crystals. Such shearing forces could expose the internal sites within the crystalline framework to which tetrahedra of the formula $MO_4$ could become affixed. Aluminum, phosphorus and/or activating metal oxides could then reform crystalline lattice portions about these sites.

The crystalline aluminum phosphate can be used in an as-synthesized form, wherein organic compounds are contained in the microporous voids, or it can be used in a calcined form, wherein organic compounds have been removed.

The crystalline aluminum phosphate is composited with the activating metal oxide by intimately grinding the two materials together, in the presence of water, after which the mixture is formed into suitable particles and dried. When the aluminum phosphate is contacted with water, it is preferably also contacted with a basic material such as sodium hydroxide. Sufficient quantities of such basic materials may improve the extrudability of the composite enabling the formation of stronger extrudates (e.g., in terms of improved crush strength). It is also theorized that sufficient quantities of such basic materials may attack the aluminum phosphate lattice structure, weakening or partially breaking this lattice, thereby aiding in the incorporation of binder material in the lattice structure.

Examples of suitable basic materials are hydroxides of Group I metals of the Periodic Table as well as alkali metal carbonates and silicates. Ammonium hydroxide is not effective but more basic quaternary ammonium hydroxides can be used although they are not preferred because of a tendency to produce thixotropic masses which are difficult to extrude. In general, suitable agents are those materials which have a pH greater than 11 at 0.1 normal concentration. The most preferred material is sodium hydroxide.

The amount of water used is preferably from 25 to 75 weight percent of the total mixture. The amount of optional basic material may be, e.g. from 0.5 to 5.0 weight percent on a dry basis based on total dry solids.

The desired enhancement of activity has not been observed if the aluminum phosphate and metal oxide are simply mixed together instead of being intimately ground as described above. The finely ground mixture of aluminum phosphate, metal oxide, water and optional basic material may conveniently be formed into particles by extrusion using an extrusion press or, alternatively, other shaping methods may be used such as pelletizing or pressing. The amount of water is chosen as to give a mixture which has a satisfactory consistency for the forming step. The aluminum phosphate may contain sufficient occluded water or sufficient water may be present in the binder.

After the aluminum phosphate/metal oxide composite has been formed it may be subjected to steaming. During this step, the composite may be held in an atmosphere entirely or partly of steam at an elevated temperature. Generally, it is preferred to operate with an atmosphere of 100% steam although partial steam atmospheres may also be used. If a gas other than steam is present it should be an inert gas such as nitrogen. The steaming is generally carried out by heating the intimate composite mixture in the presence of water at a temperature up to 500°C, preferably from 300° to 450°C. The pressure during steaming may be subatmospheric, atmospheric or superatmospheric pressure, generally in the range of 0.02 to 50 atm (2 to 5065 kPa), preferably from 0.5 to 8 atm (51 to 810 kPa). The steaming should generally be continued for at least one hour and usually durations of 12 to 48 hours will be preferred.

The steam may be produced in-situ, for example, by the dehydration of alcohols such as methanol, ethanol, propanol, n-butanol or pentanol to produce the steam, with olefins as a by-product or by the combustion of hydrocarbons to produce carbon oxides and steam.

The steaming may be carried out under conditions such as those described in European Patent Publication No. 34,444.

The acid catalytic activity of the catalyst may be measured in terms of its alpha value. The alpha value reflects the relative activity of the catalyst with respect to a high activity silica-alumina cracking catalyst. To determine the alpha value, n-hexane conversion is determined at a suitable temperature between 550°F to 1000°F (228° to 538°C), preferably at 1000°F (538°C). Conversion is varied by variation in space velocity such that a conversion level of up to about 60 percent of n-hexane is obtained and converted to a rate constant per unit volume of zeolite and compared with that of silica-alumina catalyst which is normalized to a reference activity at 1000°F (538°C). The catalytic activity of the catalyst is then expressed as multiple of this standard, i.e. the silica-alumina standard. The silica-alumina reference catalyst contains about 10 weight percent $Al_2O_3$ and the remainder $SiO_2$. This method of determining alpha, modified as described above, is described in the Journal of Catalysis, Vol. VI, pages 278—287, 1966, to which reference is made for further details of the method.

The extent of the activation produced by the present method is notable. Increases of over 100 percent in the alpha value may be obtained.

The crystalline materials of the present invention are readily convertible to catalytically active material for a variety of organic, e.g. hydrocarbon, compound conversion processes. Such conversion processes include, as non-limiting examples, cracking hydrocarbons with reaction conditions including a temperature of from about 300°C to 700°C, a pressure of from 0.1 to 30 atmosphere (10 to 3039 kPa) and a weight hourly space velocity of from 0.1 $hr^{-1}$ to 20 $hr^{-1}$; dehydrogenating hydrocarbon compounds with reaction conditions including a temperature of from 300°C to 700°C, a pressure of from 0.1 to 10 atmosphere (10 to 1013 kPa) and a weight hourly space velocity of from 0.1 to 20; converting paraffins to aromatics with reaction conditions including a temperature of from 100°C to 700°C, a pressure of from 0.1 to 60 atmosphere (10 to 6078 kPa), a weight hourly space velocity of from 0.5 to 400 and a hydrogen/hydrocarbon mole ratio of from 0 to 20; converting olefins to aromatics, e.g. benzene, toluene and xylenes, with reaction conditions including a temperature of from 100°C to 700°C, a pressure of from 0.1 to 60 atmosphere (10 to 6078 kPa), a weight hourly space velocity of from 0.5 to 400 and a hydrogen/hydrocarbon mole ratio of from 0 to 20; converting alcohols, e.g. methanol, or ethers, e.g. dimethylether, or mixtures thereof to hydrocarbons including aromatics with reaction conditions including a temperature of from 275°C to 600°C, a pressure of from 0.5 to 50 atmosphere (51 to 5065 kPa), and a liquid hourly space velocity of from 0.5 to 100; isomerizing xylene feedstock components with reaction conditions including a temperature of from 230°C to 510°C, a pressure of from 3 to 35 atmosphere (304 to 3546 kpa), a weight hourly space velocity of from 0.1 to 200 and a hydrogen/hydrocarbon mole ratio of from 0 to 100; disproportionating toluene with reaction conditions including a temperature of from 200°C to 760°C, a pressure of from 1 to 60 atmosphere (101 to 6078 kPa), and a weight hourly space velocity of from 0.08 to 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from 340°C to 500°C, a pressure of from 1 to 200 atmosphere (101 to 20260 kPa), a weight hourly space velocity of from 2 to 2000 and an aromatic hydrocarbon/alkylating agent mole ratio of from 1/1 to 20/1; and transalkylating aromatic hydrocarbons in the presence of polyalkylaromatic hydrocarbons with reaction conditions including a temperature of from 340°C to 500°C, a pressure of from 1 to 200 atmosphere (101 to 20260 kPa), a weight hourly space velocity of from 10 to 1000 and an aromatic hydrocarbon/polyalkylaromatic hydrocarbon mole ratio of from 1/1 to 16/1.

In general, therefore, catalytic conversion conditions over an activated catalyst in accordance with the present invention include a temperature of from 100°C to 760°C, a pressure of from 0.1 to 200 atmosphere (10 to 20260 kPa), a weight hourly space velocity of from 0.08 $hr^{-1}$ to 2000 $hr^{-1}$ and a hydrogen/organic, e.g. hydrocarbon, compound of 0 to 100.

The activated aluminum phosphate catalysts described herein are felt to be particularly useful for the cracking of gas oils having a boiling point range falling within the range of from 450 to 1000°F (232 to 538°C).

## Example 1

A material possessing the $AlPO_4$-5 structure (the composition and synthesis of which are described in, for example, U.S. 4,310,440) and an alpha-activity of 0.1 to 0.3 was dry-mixed with Hi-Sil 233 amorphous silica to which was added a solution of caustic soda containing 3% NaOH based on total dry solids. The material was mulled for 15 minutes and extruded through a 1/16" (1.6 mm) die. The ratio of silica to $AlPO_4$-5 was 1.5 : 1. The extrudate was dried at 100—110°C, neutralized with nitric acid, washed, redried, and calcined at 530°C. The material was then exchanged with 1M ammonium nitrate (3 times, 1h, room temperature) and calcined again in air at 530°C (3h). The final alpha-value calculated on the $AlPO_4$-5 content was 0.9.

## Example 2

The silica bound catalyst prepared in accordance with Example 1 was used to crack an Arab Medium gas oil. The reaction conditions and results are summarized in Table 1.

TABLE 1

Catalyst: 40% aluminum phosphate ($AlPO_4$-5)
60% silica (Hi-Sil 233)

(1/16" (1.6 mm) extrudate, ground and sieved to FCC size)

Feed: 650°F+ (343°C+) Joliet Sour Heavy Gas Oil
Temperature = 950°F (510°C)
Pressure = 1 atm (101 kPa)
Cat/oil (g/g) = 1.5, WHSV = 3.9

| Catalyst | 650°F+ (343°C+) Conversion % | $C_1$—$C_4$ | Wt. % Gasoline | Selectivities Distillate | Coke |
|---|---|---|---|---|---|
| Example 1 | 25.5 | 4 | 30 | 63 | 3 |

The selectivities observed are desirable in terms of low yields of $C_1$—$C_4$ products, low yields of coke and high yields of distillate. In this regard, the light hydrocarbon gases are less valuable products than either gasoline or distillate products. The distillate range materials are the highest value materials in the FCC product slate. Furthermore, the demand for gasoline is decreasing slightly, whereas that for distillates such as jet fuel and diesels is increasing. Thus, refineries may in the future have to produce more distillate fuels and less gasoline.

## Claims

1. A method of increasing the acid catalytic activity of a crystalline aluminum phosphate catalyst, said method comprising combining:
(i) a solid, microporous, crystalline aluminum phosphate material;
(ii) an amorphous, activating metal oxide; and
(iii) water
wherein said aluminum phosphate material and said activating metal oxide are intimately ground in the presence of said water, characterized in that said activating metal oxide is selected from $SiO_2$ and $GeO_2$.

2. A method according to claim 1, wherein said activating metal oxide is silica.

3. A method according to claim 1 or claim 2, wherein said components (i), (ii) and (iii) are further combined with (iv) a basic material.

4. A method according to any preceding claim, wherein the activated catalyst is formed into a composite, said metallic oxide functioning as a binder for the composite.

5. A method according to any preceding claim which further comprises the step of contacting the activated catalyst with steam under conditions sufficient to further increase the acid catalytic activity of the catalyst.

## Patentansprüche

1. Verfahren zur Erhöhung der sauren katalytischen Aktivität eines kristallinen Aluminiumphosphatkatalysators, wobei dieses Verfahren die Kombination von:
(i) einem festen mikroporösen kristallinen Aluminiumphosphatmaterial,
(ii) einem amorphen aktivierenden Metalloxid und
(iii) Wasser umfaßt,
wobei das Aluminiumphosphatmaterial und das aktivierende Metalloxid in Gegenwart des Wassers intensiv gemahlen werden, dadurch gekennzeichnet, daß das aktivierende Metalloxid aus $SiO_2$ und $GeO_2$ ausgewählt ist.

2. Verfahren nach Anspruch 1, worin das aktivierende Metalloxid Siliciumdioxid ist.

3. Verfahren nach Anspruch 1 oder Anspruch 2, worin die Komponenten (i), (ii) und (iii) weiterhin mit (iv) einem basischen Material kombiniert werden.

4. Verfahren nach einem der vorstehenden Ansprüche, worin der aktivierende Katalysator in einen Verbundstoff geformt wird, wobei das Metalloxid als Bindemittel für diesen Verbundstoff wirkt.

5. Verfahren nach einem der vorstehenden Ansprüche, das weiterhin einen Schritt des Kontaktes des aktivierten Katalysators mit Dampf bei Bedingungen umfaßt, die ausreichend sind, um die saure katalytische Aktivität des Katalysators weiter zu erhöhen.

## Revendications

1. Procédé pour augmenter l'activité catalytique acide d'un catalyseur de type phosphate d'aluminium cristallin, ledit procédé consistant à combiner:

(i) un phosphate d'aluminium cristallin, solide, microporeux;
(ii) un oxyde métallique d'activation, amorphe; et
(iii) de l'eau

dans lequel ledit phosphate d'aluminium et ledit oxyde métallique d'activation sont intimement broyés en présence de l'eau, caractérisée en ce que ledit oxyde métallique d'activation consiste en $SiO_2$ ou $GeO_2$.

2. Procédé selon la revendication 1, dans lequel ledit oxyde métallique d'activation est la silice.

3. Procédé selon la revendication 1 ou la revendication 2, dans lequel lesdits composants (i), (ii) et (iii) sont en outre combinés à (iv) un produit basique.

4. Procédé selon l'une quelconque des revendications précédentes, dans lequel le catalyseur activé est faconnée pour donner un composite, ledit oxyde métallique jouant le rôle d'un liant pour le composite.

5. Procédé selon l'une quelconque des revendications précédentes, qui comprend en outre l'étape consistant à mettre en contact le catalyseur activé avec de la vapeur dans des conditions suffisantes pour augmenter davantage l'activité catalytique acide du catalyseur.